# EUROPEAN PATENT APPLICATION

(11) **EP 4 748 717 A1**
(43) Date of publication of application: **27.05.2026**
(21) Application number: 24845981.0
(22) Date of filing: 22.07.2024
(51) Int. Cl.: B64F 1/22, E04H 6/44

(54) **ELEVATOR COVER SYSTEM**

(30) Priority: 21.07.2023 KR 20230095391; 19.07.2024 KR 20240095623; 19.07.2024 KR 20240095624; 19.07.2024 KR 20240095625
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); SONG, Joon Hyun, Chungju-si Chungcheongbuk-do 27329 (KR); PARK, Jong Dae, Chungju-si Chungcheongbuk-do 27329 (KR)
(74) Representative: Splanemann
(86) International application number: PCT/KR2024/010556
(87) International publication number: WO 2025/023679

(57) **Abstract**

An elevator cover system is disclosed. The elevator cover system includes: a cover structure comprising a cover plate disposed to face an opening of a hoistway; and a link structure comprising a link bar coupled at one end thereof to the cover plate and a link body coupled to the other end of the link bar and raised or lowered in a moving direction of the elevator car, wherein the cover plate is slidably moved in a horizontal direction orthogonal to an upward or downward travel direction of the elevator car in conjunction with movement of the link structure to open or close the opening of the hoistway.

## Description

### [Technical Field]

The present invention relates to an elevator cover system associated with urban air mobility (UAM) and vertical takeoff and landing sites (vertiports).

### [Background Art]

There is growing demand for reduction of exhaust emissions to prevent global warming. Development of new technologies and innovations in the transportation sector are required to reduce emissions from ground transportation, which accounts for about 16% of carbon dioxide emissions.

Urban air mobility is currently emerging as an alternative to ground transportation, enabling rapid transportation of passengers and cargo by air within urban centers.

It is expected that urban air mobility will reduce congestion and relieve environmental problems in urban centers due to use of electricity, and the market for urban air mobility is growing rapidly.

A vertiport, which is an airport for takeoff and landing of aircraft, may include a takeoff area, a landing area, and a hangar. UAM aircraft can take off from or land at the vertiport. Due to structural features of the vertiport, the vertiport may have a hangar on each floor and a UAM aircraft may be parked in each hangar.

As a result, the vertiport requires an elevator capable of moving the UAM aircraft in the vertical direction.

An upper portion of a hoistway installed with the elevator is open for transport of aircraft and requires a cover for blocking inflow of foreign substances while protecting an internal environment of the hoistway.

Moreover, it is desirable that the cover not have a protruding structure to ensure safety due to the characteristics of the vertiport.

### [Disclosure]

### [Technical Problem]

It is one aspect of the present invention to provide an elevator cover system that safely and efficiently supports vertical movement of UAM aircraft in a vertiport.

It is another aspect of the present invention to provide an elevator cover system that can selectively cover an opening of a hoistway of an elevator.

It is a further aspect of the present invention to provide an elevator cover system that allows a cover to be automatically opened when an elevator car moves to the rooftop and allows the cover to automatically close an opening when the elevator car moves to a lower portion of the hoistway.

It is yet another aspect of the present invention to provide an elevator cover system in which an opening of a hoistway may be opened and closed through horizontal sliding movement of a cover plate.

It is yet another aspect of the present invention to provide an elevator cover system capable of forcibly opening or closing the opening of the hoistway through vertical or horizontal movement of the cover plate.

### [Technical Solution]

In accordance with one aspect of the present invention, an elevator cover system includes: a cover structure including a cover plate disposed to face an opening of a hoistway; and a link structure including a link bar coupled at one end thereof to the cover plate and a link body coupled to the other end of the link bar and raised or lowered in a moving direction of the elevator car, wherein the cover plate is slidably moved in a horizontal direction orthogonal to an upward or downward travel direction of the elevator car in conjunction with movement of the link structure to open or close the opening of the hoistway.

The cover structure may further include a cover case configured to support the cover plate and formed with a cover plate receptacle into which the cover plate is inserted.

The cover plate may include a first cover plate and a second cover plate, and the link bar may include a first link bar and a second link bar configured to slidably move the first cover plate and the second cover plate in the horizontal direction, respectively, the first link bar being connected to the first cover plate, and the second link bar being connected to the second cover plate.

The surfaces of the first cover plate and the second cover plate facing each other may be formed with plate mating portions corresponding to each other, respectively.

The link structure may further include a link support coupled to each end of the link bar, and a link guide member in which the link support is inserted and guided to move, the link guide member being formed with a link support inserting portion extending in a longitudinal direction of the link guide member.

The link guide member may include a first link guide member and a second link guide member, the second link guide member being provided to an upper portion of the first link guide member to be disposed at both sides of the first link guide member in an orthogonal direction thereto.

The cover structure may further include a cover support configured to support horizontal movement of the cover plate and formed with a slide groove, and the cover plate may be formed with an insertion protrusion corresponding to the slide groove.

The elevator cover system may further include an elevator module configured to raise or lower the link body, wherein the elevator module includes an elevator car supporting the link body and an elevator drive part configured to lift or lower the elevator car.

The elevator drive part may include: a rope; a drive motor disposed at an upper portion of the hoistway and providing driving force for lifting or lowering the elevator car; a drive sheave coupled to the drive motor and on which the rope is supported; a car sheave coupled to the elevator car and supporting the rope for lifting or lowering the elevator car; a counterweight supported on one side of the rope; and a rope end to which the other side of the rope is coupled.

The elevator car may be formed with a link body support configured to support the link body.

The drive motor and the rope end may be disposed at an upper portion of the hoistway located below a rooftop.

The elevator car may be moved to a landing area, a hangar, and a takeoff area of a vertiport, and the cover structure may be disposed flush with a rooftop of the vertiport.

In accordance with another aspect of the present invention, an elevator cover system includes: a cover structure including a cover plate disposed to face an opening of a hoistway; a link structure including a link bar coupled at one end thereof to the cover plate; and an elevator module configured to move the link structure, wherein the elevator module includes an elevator car to which the link bar is coupled, and an elevator drive part configured to lift or lower the elevator car, and wherein the cover plate is slidably moved in a horizontal direction orthogonal to an upward or downward travel direction of the elevator car in conjunction with movement of the elevator car to open or close the opening of the hoistway.

In accordance with a further aspect of the present invention, an elevator cover system includes: a cover structure including a cover plate disposed to face an opening of a hoistway and formed with a rack gear; and an interlocking structure engaged with the rack gear of the cover plate and moving the rack gear while being raised or lowered in a moving direction of an elevator car, wherein the cover plate is slidably moved in a horizontal direction orthogonal to an upward or downward travel direction of the elevator car in conjunction with movement of the interlocking structure to open or close the opening of the hoistway.

The interlocking structure may include: an interlocking body raised or lowered in the moving direction of the elevator car and formed with a rack gear; a first rotating member having a first belt holder and a first pinion meshed with the rack gear of the interlocking body; a second rotating member having a second belt holder and a second pinion meshed with the rack gear of the cover plate; and a belt supported at one side thereof on the first belt holder of the first rotating member and at the other side thereof on the second belt holder of the second rotating member to transmit rotational force of the first rotating member to the second rotating member.

### [Advantageous Effects]

Embodiments of the present invention provide an elevator cover system that can improve operational efficiency by supporting safe upward or downward movement of UAM aircraft.

Embodiments of the present invention provide an elevator cover system that can protect a hoistway from external environmental factors by selectively covering an opening of the hoistway, thereby improving reliability of the system. For example, the elevator cover system can block foreign matter including snow and rain from entering the hoistway, and can prevent gas downdrafts caused by movement of an elevator car, thereby realizing a safe elevator system.

In the elevator cover system, a cover automatically opens and closes an opening of the hoistway in conjunction with upward or downward movement of the elevator car, thereby realizing a stable system.

The cover does not form a protruding structure on the rooftop, thereby ensuring stability of a vertiport.

The cover may be forcibly opened and closed independently of movement of the elevator car, thereby facilitating maintenance and repair.

### [Description of Drawings]

FIG. 1 is a schematic view of an elevator cover system according to a first embodiment of the present invention.
FIG. 2 is a schematic view of a link guide structure in the elevator cover system shown in FIG. 1.
FIG. 3 is a schematic view illustrating an operational mode of the elevator cover system shown in FIG. 1.
FIG. 4 is a schematic view of an elevator cover system according to a second embodiment of the present invention.
FIG. 5 is a schematic view of an elevator cover system according to a third embodiment of the present invention.
FIG. 6 is a schematic view illustrating an operational mode of the elevator cover system shown in FIG. 5.
FIG. 7 is a schematic view of an elevator cover system according to a fourth embodiment of the present invention.
FIG. 8 is a schematic view of an embodiment of the elevator cover system according to the present invention applied to a vertiport.
FIG. 9 is a schematic view of an elevator cover system according to a fifth embodiment of the present invention.
FIG. 10 is a schematic view illustrating an operational mode of the elevator cover system shown in FIG. 9.
FIG. 11 is a schematic view of an elevator cover system according to a sixth embodiment of the present invention.
FIG. 12 is a schematic view of an elevator cover system according to a seventh embodiment of the present invention.
FIG. 13 is a schematic view illustrating an operational mode of the elevator cover system shown in FIG. 12.
FIG. 14 is a schematic view of an elevator cover system according to an eighth embodiment of the present invention.
FIG. 15 is a schematic view of an embodiment of the elevator cover system according to the present invention applied to a vertiport.
FIG. 16 is a schematic block diagram of an elevator cover system according to the present invention.
FIG. 17 is a schematic view of an elevator cover system according to a ninth embodiment of the present invention.
FIG. 18 is a schematic view illustrating an operational mode of the elevator cover system shown in FIG. 17.
FIG. 19 is a schematic view of an elevator cover system according to a tenth embodiment of the present invention.
FIG. 20 is a schematic view of an elevator cover system according to an eleventh embodiment of the present invention.
FIG. 21 is a schematic view of an elevator cover system according to a twelfth embodiment of the present invention.
FIG. 22 is a schematic view of an embodiment of the elevator cover system according to the present invention applied to a vertiport.

### [Best Mode]

Hereinafter, exemplary embodiments of the present invention will be described in detail with reference to the accompanying drawings such that the present invention may be easily realized by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

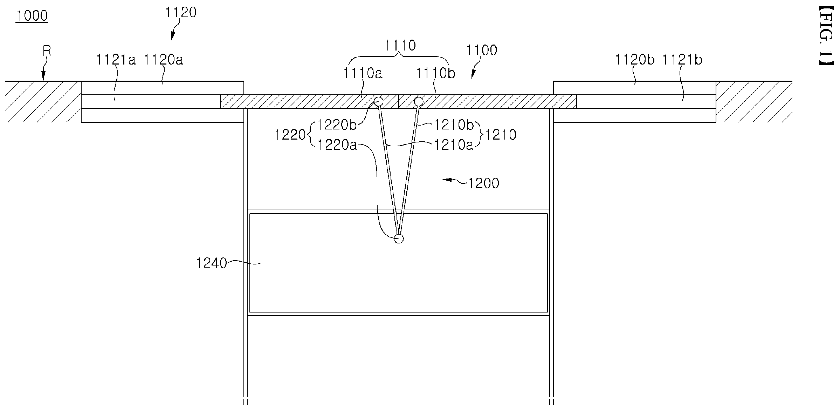

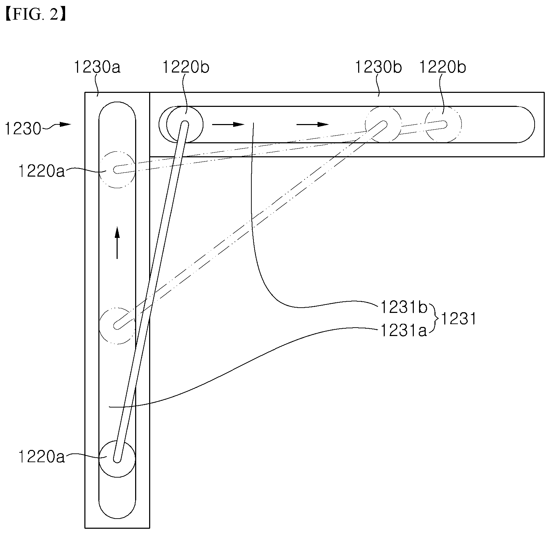

FIG. 1 is a schematic view of an elevator cover system according to a first embodiment of the invention and FIG. 2 is a schematic view of a link guide structure in the elevator cover system shown in FIG. 1.

An elevator according to the present invention is configured to lift or lower a UAM aircraft. The elevator according to the present invention may be referred to as a UAM elevator.

When a takeoff area, a landing area, and a hangar of UAM aircraft are arranged on different floors, the UAM elevator raises or lowers a UAM aircraft in a vertical direction for operation of the UAM aircraft.

On the other hand, an elevator structure in which the elevator is disposed is formed with a hoistway in which an elevator car travels, and the hoistway is formed at an upper end thereof with an opening to transport the UAM aircraft to the rooftop.

An elevator cover system 1000 is configured to selectively open or close the opening in the elevator structure in conjunction with movement of the elevator car receiving a UAM aircraft therein.

That is, when the elevator is lifted to the rooftop for transport of the UAM aircraft, the elevator cover system 1000 opens the opening of the hoistway in conjunction with movement of the elevator car.

In addition, when the UAM elevator is lowered, the elevator cover system 1000 closes the opening of the hoistway.

To this end, the elevator cover system 1000 includes a cover structure 1100 and a link structure 1200.

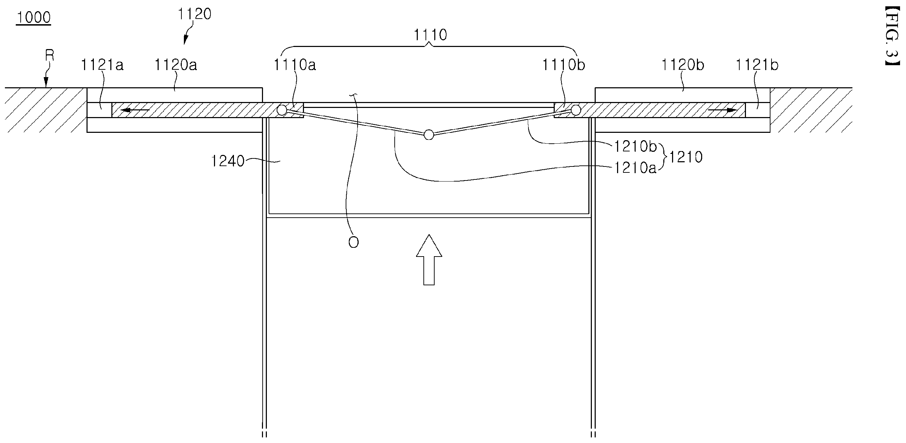

More specifically, the cover structure 1100 is configured to open or close an opening (denoted by "O" in FIG. 3) of the hoistway in conjunction with movement of the link structure 1200.

The cover structure 1100 includes a cover plate 1110 and a cover case 1120.

The cover plate 1110 is connected to the link structure 1200 and opens or closes the opening in conjunction with movement of the link structure 1200.

The cover plate 1110 may be disposed to face the opening and may be formed in a size capable of covering the opening.

The cover plate 1110 may be supported on the cover case 1120 to allow sliding movement orthogonal to an upward or downward travel direction of the elevator.

The cover plate 1110 includes a first cover plate 1110a and a second cover plate 1110b. The first cover plate 1110a and the second cover plate 1110b may be provided as a pair of cover plates symmetrical to each other.

The first cover plate 1110a and the second cover plate 1110b may be disposed in the same plane at opposite sides relative to a center of the opening. That is, the first cover plate 1110a and the second cover plate 1110b may be supported on the cover case 1120 so as to be slidably movable in opposite directions relative to the center of the opening.

The first cover plate 1110a and the second cover plate 1110b may open the opening while slidably moving in opposite directions and may close the opening in the elevator structure while slidably moving toward the center of the opening.

The cover case 1120 guides and supports the cover plate 1110 to allow sliding movement of the cover plate 1110.

The cover case 1120 may include a first cover case 1120a and a second cover case 1120b, which are disposed at opposite sides of the opening, respectively.

The first cover case 1120a and the second cover case 1120b may be formed with cover plate receptacles 1121a, 1121b, into or from which the first cover plate 1110a and the second cover plate 1110b are inserted or withdrawn, respectively.

In addition, each of the first cover case 1120a and the second cover case 1120b may be embedded in the rooftop R and may be disposed flush with the rooftop.

Thus, the elevator cover system does not protrude from the rooftop surface, thereby ensuring safety for taking off or landing of aircraft.

The link structure 1200 includes a link bar 1210, a link support 1220, and a link body 1240.

Referring to FIG. 2, the link structure 1200 may further include a link guide member 1230 that guides movement of the link bar 1210.

The link bar 1210 moves the cover plate 1110 in conjunction with movement of the link body 1240.

To this end, the link bar 1210 may be pivotably coupled at an upper end thereof to the cover plate 1110 and at a lower end thereof to the link body 1240.

The link bar 1210 may include a first link bar 1210a and a second link bar 1210b for sliding movement of the first cover plate 1110 and the second cover plate 1110b, respectively, in a horizontal direction orthogonal to an upward or downward travel direction of the elevator car.

The first link bar 1210a is connected to the first cover plate 1110a and the second link bar 1210b is connected to the second cover plate 1110b.

The link guide member 1230 is formed therein with a link guide 1231 that guides movement of the link bar 1210.

A link support 1220 may be coupled to each end of the link bar 1210 and may be inserted into the link guide 1231 and guided to move therealong.

The link bar 1210 may include a damper or resilient structure at an end thereof to improve dynamic properties.

The link guide member 1230 includes a first link guide member 1230a and a second link guide member 1230b.

The second link guide member 1230b may be provided to an upper portion of the first link guide member 1230a to be disposed at both sides of the first link guide member 1230a in an orthogonal direction thereto.

That is, the first link guide member 1230a may be disposed in the upward or downward travel direction of the elevator, and the second link guide member 1230b may be disposed in an opening or closing direction of the cover plate 1110.

The second link guide member 1230b may extend from an upper end of the first link guide member 1230a in the orthogonal direction thereto.

The first link guide member 1230a may be formed with a first link support inserting portion 1231a and the second link guide member 1230b may be formed with a second link support inserting portion 1231b.

The first link support inserting portion 1231a may be formed in an extension direction of the first link guide member 1230a, and the second link support inserting portion 1231b may extend in a longitudinal direction of the second link guide member 1230b.

The link support 1220 includes a first side link support 1220a coupled to one end of the link bar 1210 and a second side link support 1220b coupled to the other end of the link bar 1210.

The link support 1220 may be composed of a roller joint generally having a cylindrical shape.

In addition, coupling between the link bar 1210 and the link support 1220 may be realized by a ball joint.

The first side link support 1220a may be inserted into the first link support inserting portion 1231a of the first link guide member 1230a and the second side link support 1220b may be inserted into the second link support inserting portion 1231b of the second link guide member 1230b.

Each of the first link bar 1210a and the second link bar 1210b may be connected at a lower end thereof to the first side link support 1220a inserted into the first link support inserting portion 1231a of the first link guide member 1230a.

In addition, each of the first link bar 1210a and the second link bar 1210b may be connected at an upper end thereof to the second side link support 1220b inserted into the second link support inserting portion 1231b of the second link guide member 1230b disposed at either side of the first link guide member 1230a.

That is, the second side link support 1220b is inserted into the second link guide member 1230b disposed at either side of the first link guide member 1230a and guided to move therein, and the first cover plate 1110a and the second cover plate 1110b are slidably moved in opposite directions.

In addition, the link guide member 1230 may include a third link guide member (not shown), which is identical to the first link guide member 1230a, and a fourth link guide member (not shown), which is identical to the second link guide member 1230b, in which the first link guide member 1230a and the third link guide member (not shown) may be disposed adjacent to each other, and the second link guide member 1230b and the fourth link guide member (not shown) may be disposed to extend in opposite directions from the first link guide member 1230a and the third link guide member (not shown), respectively.

The link body 1240 is raised or lowered in the upward or downward travel direction of the elevator car and moves the link bar 1210.

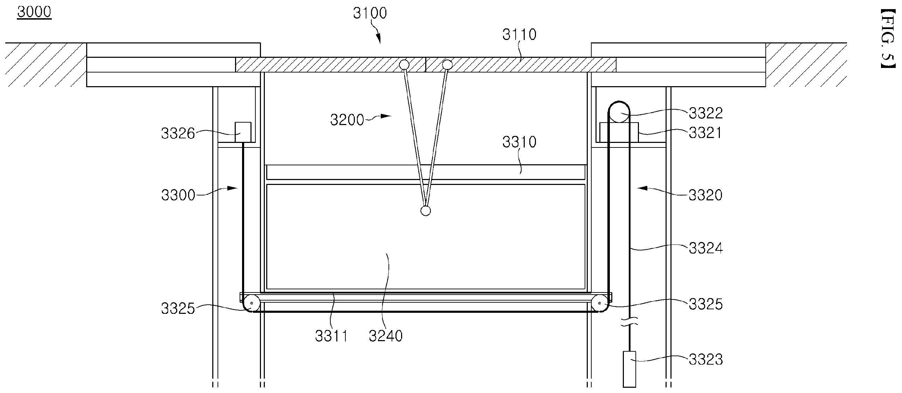

The link body 1240 may be supported on the elevator car 3310 (see FIG. 5) to move the link bar 1210 while being lifted or lowered.

To this end, the link body 1240 may be disposed at an upper portion of the elevator structure with the link bar 1210 lowered by a length of the link bar 1210, and may be disposed adjacent to a hoistway along which the elevator car moves.

In addition, the link body 1240 may have a car support (not shown) formed thereon to support the elevator car.

The elevator cover system according to the invention may be applied to elevators for vehicles including general aircraft as well as urban air mobility aircraft.

FIG. 3 is a schematic view illustrating an operational mode of the elevator cover system shown in FIG. 1.

Referring to FIG. 3, in the elevator cover system 1000, the link body 1240 is raised to the rooftop R.

More specifically, the link body 1240 may be supported on the elevator car and may be raised to the rooftop, when the elevator is lifted to the rooftop in order to transport a UAM aircraft to the rooftop corresponding to a takeoff and landing area.

At this time, the lower ends of the first link bar 1210a and the second link bar 1210b are raised in conjunction with upward movement of the link body 1240, and the upper ends of the first link bar 1210a and the second link bar 1210b are horizontally moved to both sides.

In addition, the first side link support 1220a connected to each of the first link bar 1210a and the second link bar 1210b may be guided to be raised along the first link support inserting portion 1231a of the first link guide member 1230a, as shown in FIG. 2.

Accordingly, the second side link support 1220b, to which each of the first link bar 1210a and the second link bar 1210b is connected at the upper end thereof, is guided to be slidably moved to both sides along the second link support inserting portion 1231b of the second link guide member 1230b.

Further, the first cover plate 1110a and the second cover plate 1110b, to which the first link bar 1210a and the second link bar 1210b are connected at the upper ends thereof, respectively, are slidably moved in the horizontal direction to open an opening O of a hoistway.

On the other hand, when the link body 1240 is not supported on the elevator car as the elevator car is lowered, the link body 1240 may be lowered due to gravity or by a separate weight structure to close the opening O of the hoistway.

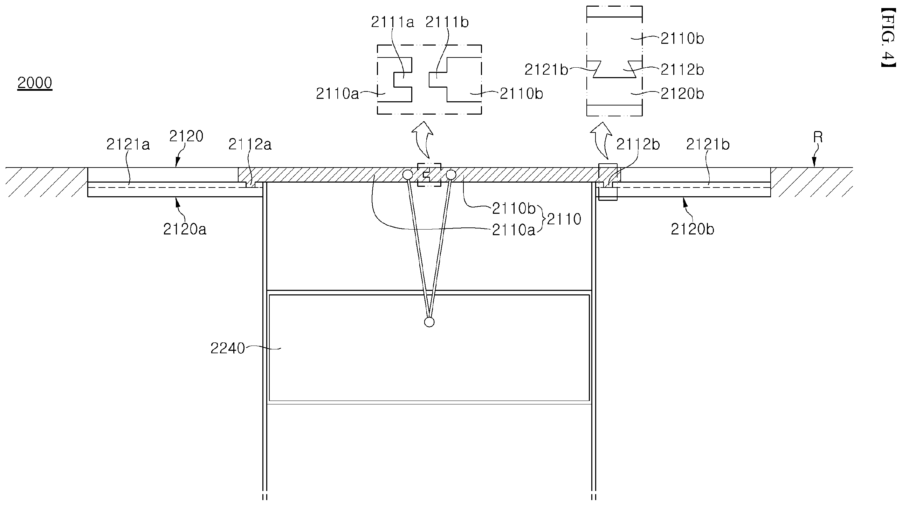

FIG. 4 is a schematic view of an elevator cover system according to a second embodiment of the present invention.

The elevator cover system 2000 is different only in the shape of the cover structure from the elevator cover system 1000 shown in FIG. 1.

Referring to FIG. 4, the elevator cover system 2000 includes a cover structure 2100 and a link structure 2200.

More specifically, the link structure 2200 is the same as the link structure 1200 of the elevator cover system 1000 and thus a detailed description thereof will be omitted.

The cover structure 2100 includes a cover plate 2110 and a cover support 2120.

The cover plate 2110 includes a first cover plate 2110a and a second cover plate 2110b, which are provided as a pair of cover plates symmetrical to each other.

Opposite surfaces of the first cover plate 2110a and the second cover plate 2110b facing each other may be formed with plate mating portions corresponding to each other, respectively.

By way of example, the first cover plate 2110a may be formed with a mating groove 2111a, and the second cover plate 2110b may be formed with a mating projection 2111b corresponding to the mating groove 2111a.

When the first cover plate 2110a and the second cover plate 2110b are moved toward the center of the opening to close the opening in the elevator structure, the mating protrusion 2111b of the second cover plate 2110b is inserted into the mating groove 2111a of the first cover plate 2110a.

The cover support 2120 supports horizontal movement of the cover plate 2110 and is embedded in the rooftop R.

When the cover plate 2110 is horizontally moved on the cover support 2120, the cover plate 2110 may be disposed flush with the rooftop R.

Alternatively, the cover support 2120 may be disposed flush with the rooftop R.

The cover support 2120 includes a first cover support 2120a and a second cover support 2120b. The first cover support 2120a and the second cover support 2120b are disposed at the opposite sides of the opening.

The first cover support 2120a may be formed with a first slide groove 2121a and the second cover support 2120b may be formed with a second slide groove 2121b.

The first cover plate 2110a may be formed with a first insertion projection 2112a corresponding to the first slide groove 2121a, and the second cover plate 2110b may be formed with a second insertion projection 2112b corresponding to the second slide groove 2121b.

The first insertion protrusion 2112a of the first cover plate 2110a is inserted into the first slide groove 2121a in the first cover support 2120a, and the second insertion protrusion 2112b of the second cover plate 2110b is inserted into the second slide groove 2121b in the second cover support 2120b to be slidably moved therein.

Accordingly, the cover structure 2100 may be realized as a more stable structure.

As a result, the elevator cover system 2000 according to the second embodiment can more reliably cover the opening of the hoistway through the mating structure of the cover plate 2110, and can more reliably prevent inflow of foreign matter, such as rainwater and the like.

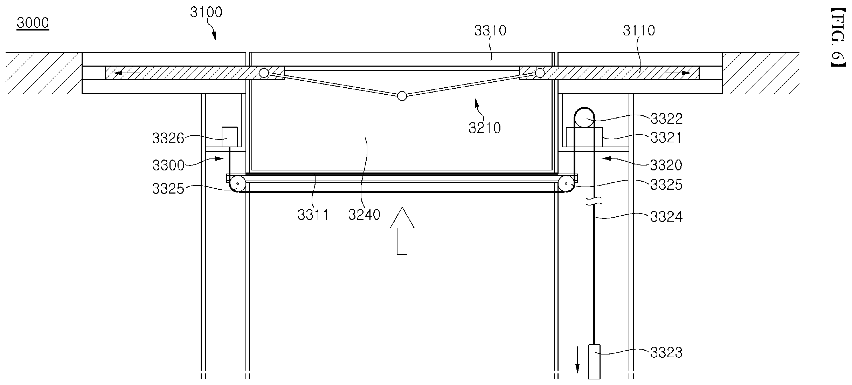

FIG. 5 is a schematic view of an elevator cover system according to a third embodiment of the invention and FIG. 6 is a schematic view illustrating an operational mode of the elevator cover system shown in FIG. 5.

An elevator cover system 3000 opens or closes the opening of the hoistway as the link body is raised while being supported on the elevator car or as the link body is lowered due to gravity or by a separate weight structure when the elevator car is lowered.

More specifically, FIG. 5 shows an elevator car 3310 lifted to contact the link body 3240 and FIG. 6 shows the elevator car 3310 lifted to the rooftop.

The elevator cover system 3000 further includes an elevator module, as compared with the elevator cover system 1000 shown in FIG. 1.

As shown in the drawings, an elevator cover system 3000 includes a cover structure 3100, a link structure 3200, and an elevator module 3300.

The cover structure 3100 and the link structure 3200 are the same as the cover structure 1100 and the link structure 1200 shown in FIG. 1, and a detailed description thereof will be omitted herein.

The elevator module 3300 includes an elevator car 3310 and an elevator drive part 3320.

The elevator drive part 3320 serves to lift or lower the elevator car 3310.

The elevator drive part 3320 includes a drive motor 3321, a drive sheave 3322, a counterweight 3323, a rope 3324, a car sheave 3325, and a rope end 3326.

The drive motor 3321 is disposed at an upper portion of the hoistway and provides driving force for lifting or lowering the elevator car 3310.

The drive motor 3321 rotates the drive sheave 3220, on which the rope 3324 is supported, to lift or lower the elevator car 3310.

The drive sheave 3322 is coupled to the drive motor 3321.

The car sheave 3325 is coupled to the elevator car 3310 and supports the rope 3324, which lifts or lowers the elevator car 3310.

The rope 3324 is supported on the drive sheave 3322 and the car sheave 3325. The rope 3324 may support the counterweight 3323 on one end thereof and may be coupled at the other end thereof to the rope end 3326.

The elevator drive part 3320 may further include a counterweight end (not shown) disposed adjacent to the drive motor 3321.

The counterweight may be coupled to a counterweight sheave (not shown) and the rope 3324 may be supported on the counterweight sheave and may be coupled at the other end thereof to the counterweight end.

The elevator car 3310 may be formed with a link body support 3311 configured to support the link body 3240.

The link body support 3311 may be formed to protrude toward the link body 3240 such that the link body 3240 can be supported thereby.

In addition, the link body support 3311 may be formed as a link body seat on which the link body 3240 is seated.

The drive motor 3321 and the rope end 3326 may be disposed at an upper portion of the hoistway located below a rooftop.

In the elevator cover system 3000 according to the third embodiment constructed as described above, when the elevator car 3310 of the elevator module 3300 is lifted by the elevator drive part 3320, the link body 3240 is raised while being supported on the elevator car 3310.

In conjunction with upward movement of the link body 3240, the cover plate 3110 of the cover structure 3100 open the opening O of the hoistway while slidably moving in the horizontal direction.

In addition, when the elevator car 3310 is lowered, the link body 3240 is lowered due to gravity, and the cover plate 3110 closes the opening O of the elevator structure in conjunction with downward movement thereof.

On the other hand, a separate weight (not shown) may be coupled to the link body 3240 by a rope (not shown) to more efficiently realize lowering of the cover plate 3110 and closing of the opening by the cover plate.

Furthermore, the elevator cover system according to the third embodiment of the invention may incorporate the elevator module to the elevator cover system 2000 shown in FIG. 4.

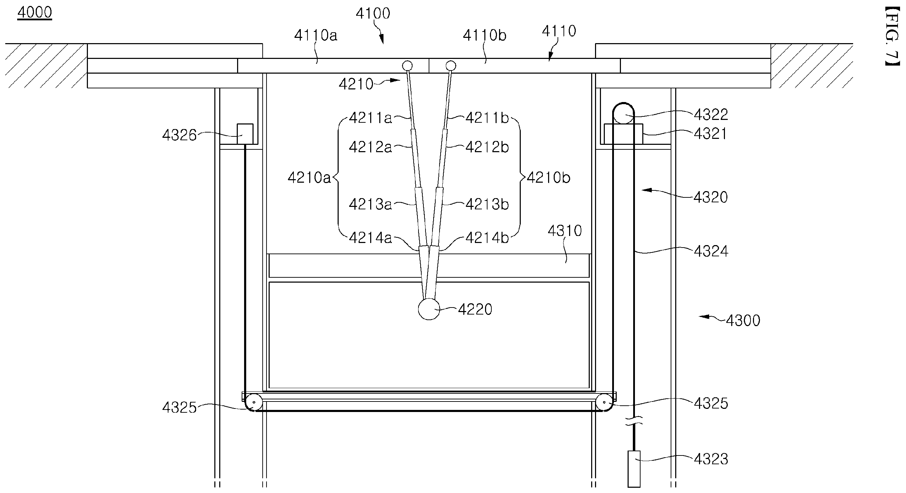

FIG. 7 is a schematic view of an elevator cover system according to a fourth embodiment of the present invention.

An elevator cover system 4000 includes a link bar directly connected to the elevator car, and a cover plate slidably movable in direct conjunction with upward or downward movement of the elevator car to open or close an opening in the elevator structure.

To this end, the elevator cover system 4000 has the same structure as the elevator cover system 3000 shown in FIG. 5 excluding the link bar and the link body.

Referring to FIG. 7, the elevator cover system 4000 includes a cover structure 4100, a link structure 4200, and an elevator module 4300.

More specifically, the cover structure 4100 has the same structure as the cover structure 3100 and a detailed description thereof will be omitted herein.

The link structure 4200 includes a link bar 4210, a link support 4220, and a link guide member (not shown). The link support 4220 and the link guide member (not shown) have the same structures as the link support 1220 and the link guide member 1230, and a detailed description thereof will be omitted herein.

The link bar 4210 may include a first link bar 4210a and a second link bar 4210b.

The first link bar 4210a and the second link bar 4210b may be rotatably connected at one end thereof to the elevator car 4310 by the link support 4220, and may be rotatably connected at the other end thereof to the first cover plate 4110a and the second cover plate 4110b, respectively, by the link support 4220.

Each of the first link bar 4210a and the second link bar 4210b may be realized as a foldable link bar capable of being folded and unfolded. To this end, each of the first link bar 4210a and the second link bar may include a plurality of link connecting bars.

FIG. 7 shows one example of this structure, in which the first link bar 4210a includes a first link connecting bar 4211a, a second link connecting bar 4212a, a third link connecting bar 4213a, and a fourth link connecting bar 4214a, and the second link bar 4210b includes a first link connecting bar 4211b, a second link connecting bar 4212b, a third link connecting bar 4213b, and a fourth link connecting bar 4214b.

In the elevator cover system 4000 constructed as described above, when the elevator car 4310 is lifted, the first link bar 4210a and the second link bar 4210b are folded in such a way that the link connecting bars are inserted, and when the first link bar 4210a and the second link bar 4210b are fully folded, the first link bar 4210a and the second link bar 4210b are guided in the horizontal direction to allow the first cover plate 4110a and the second cover plate 4110b to be slidably moved in the horizontal direction, and the opening of the hoistway is opened.

Next, as the elevator car 4310 is lowered, the first cover plate 4110a and the second cover plate 4110b are slidably moved in the horizontal direction and the opening in the elevator structure is closed.

When the elevator car 4310 continues to descend toward a lower story of a hangar or a lower story of the elevator structure, link bodies of the first link bar 4210a and the second link bar 4210b are sequentially unfolded.

Accordingly, the elevator cover system 4000 can be realized with a simpler structure.

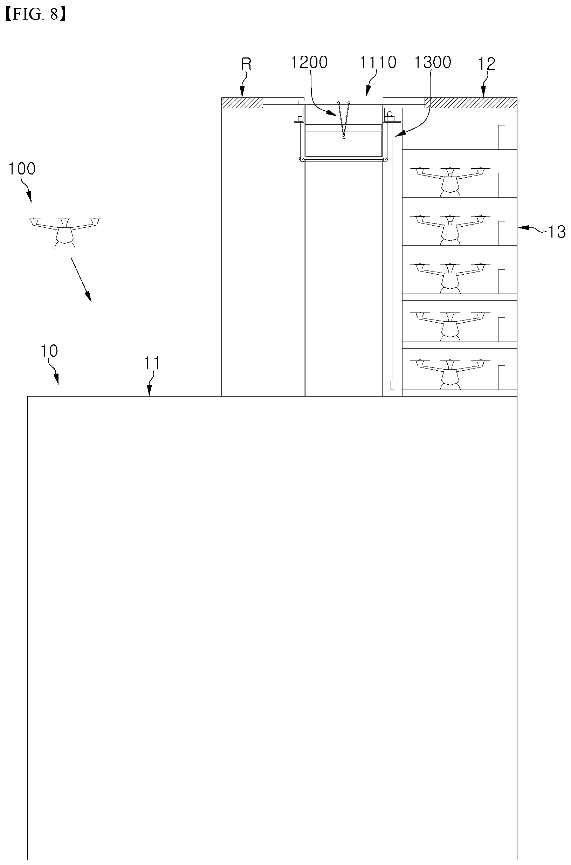

FIG. 8 is a schematic view of an embodiment of the elevator cover system according to the present invention applied to a vertiport.

As shown in the drawing, more specifically, an elevator cover system may be applied to a vertiport, which is a vertical takeoff and landing site for urban air mobility aircraft.

The vertiport may include a takeoff area, a landing area, and a hangar.

The vertiport 10 may be constructed on the rooftop of a building.

In addition, the hangar 13 of the vertiport 10 may be composed of multiple stories, and each of the takeoff area 11 and the landing area 12 may be selectively located on the rooftop of the building or on the rooftop of the hangar.

An aircraft 100 may be moved to the landing area 12, the hangar 13, and the takeoff area 11 by the elevator module 1300, and may be parked in the hangar P.

When an elevator car of the elevator module 1300 is not located on the vertiport 10, the cover plate 1110 closes the opening of the hoistway.

When the elevator car moves to the rooftop R of the vertiport, which is an upper end of the vertiport 10, the cover plate 1110 opens the opening of the hoistway while slidably moving in the horizontal direction, as shown in FIG. 6.

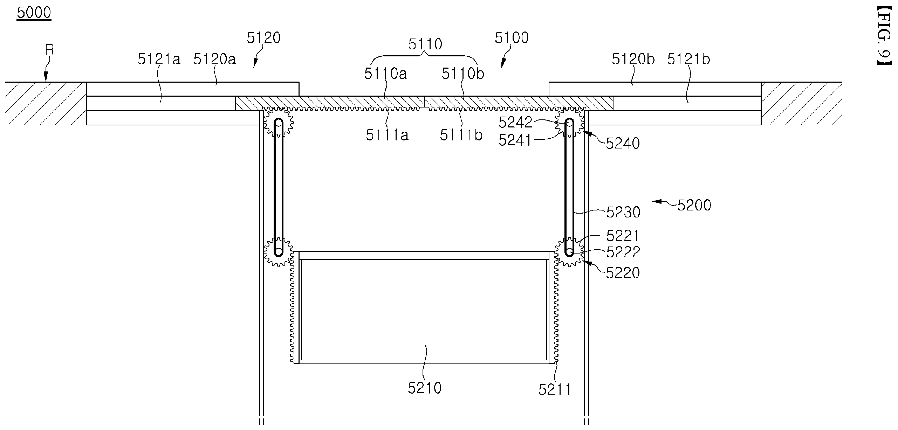

FIG. 9 is a schematic view of an elevator cover system according to a fifth embodiment of the present invention.

The elevator according to the present invention is configured to transport a UAM aircraft to the rooftop of a building. That is, the elevator according to the present invention is configured to transport the UAM aircraft vertically with respect to a takeoff or landing area located on the rooftop of the building and a hangar located inside the building.

Herein, the elevator may be referred to as a UAM elevator.

The elevator is configured to lift or lower UAM aircraft. For example, when a takeoff area, a landing area, and a hangar of the vertiport are arranged on different floors, the UAM elevator lifts or lowers the UAM aircraft in the vertical direction for operation of the UAM aircraft.

On the other hand, an elevator structure installed with the elevator is formed with a hoistway in which the elevator car travels, and the hoistway is formed at an upper end thereof with an opening for transporting the UAM aircraft to the rooftop.

An elevator cover system 5000 is configured to selectively open or close the opening of the hoistway in conjunction with movement of the elevator car receiving a UAM aircraft therein

That is, when the elevator is lifted to the rooftop for transport of the UAM aircraft, the elevator cover system 5000 opens the opening of the hoistway in conjunction with movement of the elevator car.

In addition, when the UAM elevator is lowered, the elevator cover system 5000 closes the opening of the hoistway.

The elevator cover system 5000 includes a cover structure 5100 and an interlocking structure 5200.

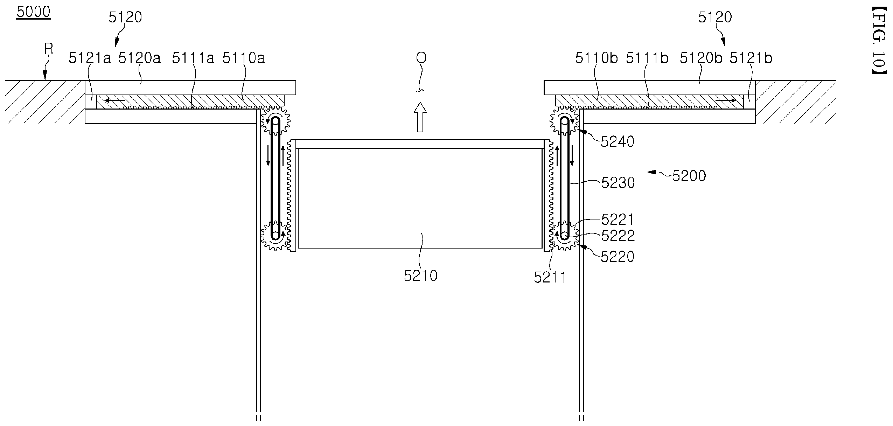

More specifically, the cover structure 5100 is configured to open or close an opening (denoted by "O" in FIG. 10) of the hoistway in conjunction with movement of the interlocking structure 5200.

The cover structure 5100 includes a cover plate 5110 and a cover case 5120.

The cover plate 5110 is connected to the interlocking structure 5200 and is interlinked with movement of the interlocking structure 5200.

The cover plate 5110 may be located corresponding to the opening and may be formed in a size capable of covering the opening.

The cover plate 5110 may be supported on the cover case 5120 so as to be slidably moved in a direction orthogonal to the upward or downward travel direction of the elevator.

The cover plate 5110 may include a first cover plate 5110a and a second cover plate 5110b, which are provided as a pair of cover plates symmetrical to each other.

The first cover plate 5110a and the second cover plate 5110b are formed with rack gears 5111a, 5111b for interlocking with the interlocking structure 5200, respectively.

The first cover plate 5110a and the second cover plate 5110b may be disposed in the same plane at the opposite sides relative to the center of the opening. That is, the first cover plate 5110a and the second cover plate 5110b may be supported on the cover case 5120 so as to be slidably movable in opposite directions relative to the center of the opening.

The first cover plate 5110a and the second cover plate 5110b may open the opening while slidably moving in opposite directions and may close the opening in the elevator structure while slidably moving toward the center of the opening.

The cover case 5120 guides and supports the cover plate 5110 to allow sliding movement of the cover plate 5110.

The cover case 5120 may include a first cover case 5120a and a second cover case 5120b, which are disposed at the opposite sides of the opening, respectively.

The first cover case 5120a and the second cover case 5120b may be formed with cover plate receptacles 5121a, 5121b, into or from which the first cover plate 5110a and the second cover plate 5110b are inserted or withdrawn, respectively.

In addition, each of the first cover case 5120a and the second cover case 5120b may be embedded in the rooftop R and may be disposed flush with the rooftop

Thus, the elevator cover system does not protrude from the rooftop surface, thereby ensuring safety upon taking off or landing of UAM aircraft.

The interlocking structure 5200 includes an interlocking body 5210, a first rotating member 5220, a belt 5230, and a second rotating member 5240.

The interlocking body 5210 is raised or lowered in a moving direction of the elevator car and rotates the first rotating member 5220.

To this end, the interlocking body 5210 may be disposed at an upper portion of the hoistway to be adjacent to the elevator car, with the cover plate 5110 lowered by a length that the cover plate 5110 is moved by rotation of the second rotating member 5240.

The interlocking body 5210 is formed with rack gears 5211, each of which is engaged with the first rotating member 5220.

The rack gears 5211 may be coupled to the opposite sides of the interlocking body 5210.

The first rotating member 5220 may be formed with a first pinion 5221 and a first belt holder 5222.

The first pinion 5221 is meshed with the rack gear 5211 of the interlocking body 5210 and the belt 5230 is supported on the first belt holder 5222.

The second rotating member 5240 moves the cover plate 5110 in conjunction with upward or downward movement of the interlocking body 5210.

The second rotary portion 5240 may be formed with a second pinion 5241 and a second belt holder 5242.

The second pinion 5241 is meshed with each of the rack gears 5111a, 5111b of the first cover plate 5110a and the second cover plate 5110b, and the belt 5230 is supported on the second belt holder 5222.

The belt 5230 transmits rotational force of the first rotating member 5220 to the second rotating member 5240. To this end, the belt 5230 is supported at one side thereof on the first belt holder 5222 of the first rotating member 5220 and at the other side thereof on the second belt holder 5242 of the second rotating member 5240.

To accurately move the cover plate 5110, the belt 5230 may be composed of a time belt, and the first belt holder 5222 and the second belt holder 5242 may be composed of time belt pulleys.

In the elevator cover system 5000 constructed as described above, the first pinions 5221 of the first rotating members 5220 are meshed with the rack gears 5211 at the opposite sides of the interlocking body 5210; the belt 5230 is supported at one side thereof on each of the first rotating members 5220 and at the other side thereof on each of the second rotating members 5240; and the rack gears 5111a, 5111b of the first cover plate 5110a and the second cover plate 5110b are meshed with the second pinions 5241 of the second rotating members 5240, respectively.

The elevator cover system according to the present invention may be applied to elevators for vehicles including general aircraft as well as urban air mobility aircraft.

FIG. 10 is a schematic view illustrating an operational mode of the elevator cover system shown in FIG. 9.

Referring to FIG. 10, the elevator cover system 5000 is in a state that the interlocking body 5210 opens the opening while being raised.

When the interlocking body 5210 is raised, the first rotating member 5220 meshed with the rack gear 5211 of the interlocking body 5210 is rotated.

The belt 5230 is interlinked with rotation of the first rotating member 5220 to move and the second rotating member 5240 is interlinked with movement of the belt 5230 to rotate.

The first cover plate 5110a and the second cover plate 5110b are slidably moved in the horizontal direction to open the opening O of the hoistway in conjunction with rotation of the second rotating members 5240.

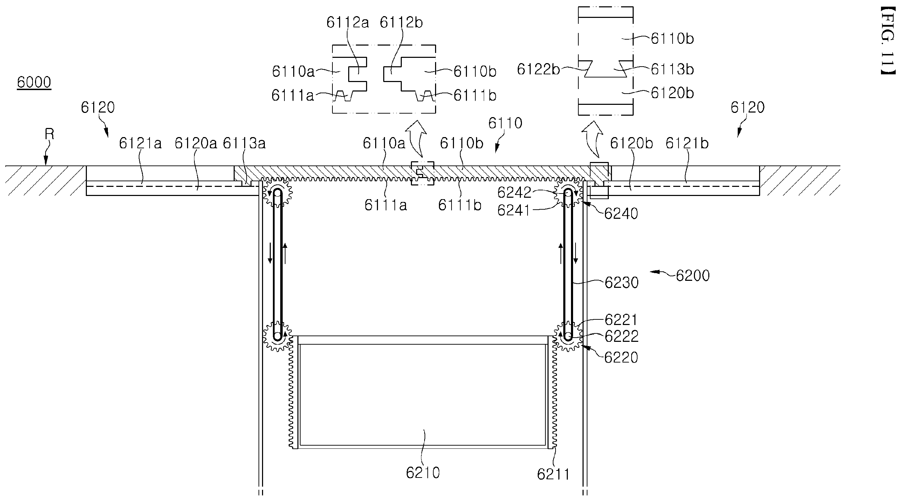

FIG. 11 is a schematic view of an elevator cover system according to a sixth embodiment of the present invention.

An elevator cover system 6000 has the same structure as the elevator cover system 5000 shown in FIG. 9 excluding the shape of the cover structure.

Referring to FIG. 11, the elevator cover system 6000 includes a cover structure 6100 and an interlocking structure 6200.

More specifically, the interlocking structure 6200 is the same as the interlocking structure 5200 of the elevator cover system 5000, and a detailed description thereof will be omitted herein.

The cover structure 6100 includes a cover plate 6110 and a cover support 6120.

The cover plate 6110 includes a first cover plate 6110a and a second cover plate 6110b, which are provided as a pair of cover plates symmetrical to each other.

Opposite surfaces of the first cover plate 6110a and the second cover plate 6110b facing each other may be formed with plate mating portions corresponding to each other, respectively.

By way of example, the first cover plate 6110a may be formed with a mating groove 6112a and the second cover plate 6110b may be formed with a mating projection 6112b corresponding to the mating groove 6112a.

When the first cover plate 6110a and the second cover plate 6110b are moved toward the center of the opening to close the opening of the hoistway, the mating protrusion 6112b of the second cover plate 6110b is inserted into the mating groove 6112a of the first cover plate 6110a.

The first cover plate 6110a and the second cover plate 6110b are formed with rack gears 6111 a, 6111b, respectively.

The cover support 6120 is configured to support horizontal movement of the cover plate 6110 and is embedded in the rooftop R.

When the cover plate 6110 is horizontally moved on the cover support 6120, the cover plate 6110 may be disposed flush with the rooftop R.

Alternatively, the cover support 6120 may be disposed flush with the rooftop R.

The cover support 6120 includes a first cover support 6120a and a second cover support 6120b. The first cover support 6120a and the second cover support 6120b are disposed at the opposite sides of the opening.

The first cover support 6120a may be formed with a first slide groove 6121a and the second cover support 6120b may be formed with a second slide groove 6121b.

The first cover plate 6110a may be formed with a first insertion projection 6113a corresponding to the first slide groove 6121a, and the second cover plate 6110b may be formed with a second insertion projection 6113b corresponding to the second slide groove 6121b.

The first insertion protrusion 6113a of the first cover plate 6110a is inserted into the first slide groove 6121a in the first cover support 6120a and the second insertion protrusion 6113b of the second cover plate 6110b is inserted into the second slide groove 6121b in the second cover support 6120b to be slidably moved therein.

Accordingly, the cover structure 6100 may be realized as a more stable structure.

As a result, the elevator cover system 6000 according to the sixth embodiment can more reliably cover the opening of the hoistway through the mating structure of the cover plate 6110 and can more reliably prevent inflow of foreign matter, such as rainwater and the like.

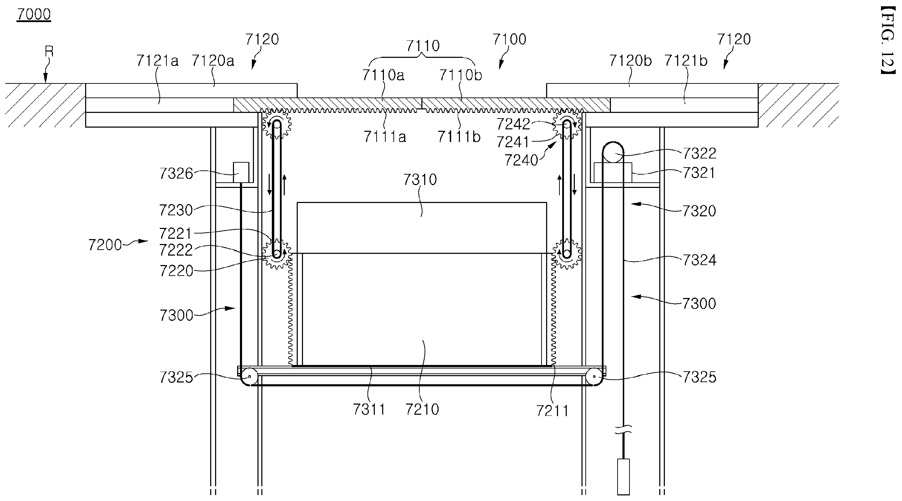

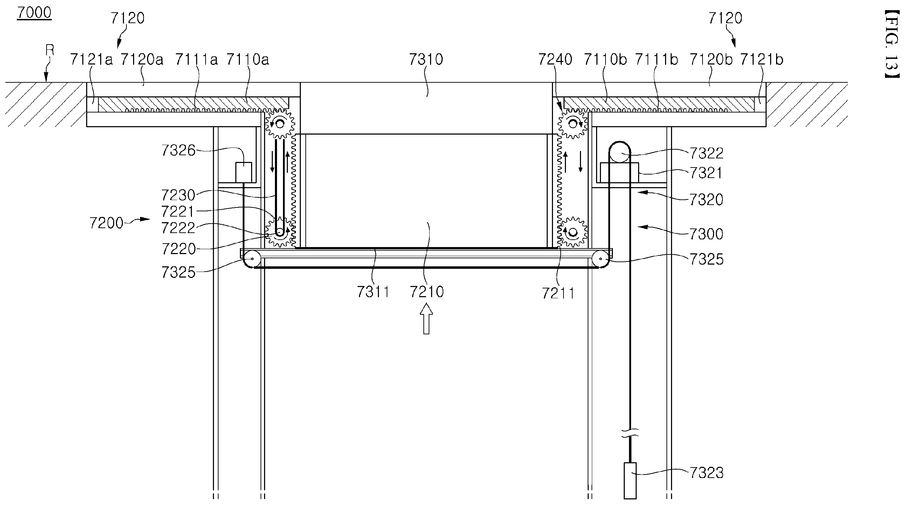

FIG. 12 is a schematic view of an elevator cover system according to a seventh embodiment of the invention and FIG. 13 is a schematic view illustrating an operational mode of the elevator cover system shown in FIG. 12.

The elevator cover system opens or closes the opening of the hoistway as the link body is raised while being supported on the elevator car or as the link body is lowered due to gravity or by a separate weight structure.

To this end, the elevator cover system 7000 further includes an elevator module, as compared with the elevator cover system 5000 shown in FIG. 9.

Referring to FIG. 12, the elevator cover system 7000 includes a cover structure 7100, an interlocking structure 7200, and an elevator module 7300.

The cover structure 7100 and the interlocking structure 7200 are the same as the cover structure 5100 and the interlocking structure 5200 shown in FIG. 9, and detailed descriptions thereof will be omitted herein.

The elevator module 7300 includes an elevator car 7310 and an elevator drive part 7320.

The elevator drive part 7320 includes a drive motor 7321, a drive sheave 7322, a counterweight 7323, a rope 7324, a car sheave 7325, and a rope end 7326.

The drive motor 7321 is disposed at an upper portion of the hoistway and provides driving force for lifting or lowering the elevator car 7310.

The drive motor 7321 rotates the drive sheave 7322, on which the rope 7324 is supported, to lift or lower the elevator car 7310.

The drive sheave 7322 is coupled to the drive motor 7321.

The car sheave 7325 is coupled to the elevator car 7310 and supports the rope 7324, which lifts or lowers the elevator car 7310.

The rope 7324 is supported on the drive sheave 7322 and the car sheave 7325. The rope 7324 may support the counterweight 7323 on one end thereof and may be coupled at the other end thereof to the rope end 7326.

The elevator drive part 7320 may further include a counterweight end (not shown) adjacent to the drive motor 7321.

The counterweight may be coupled to a counterweight sheave (not shown), and the rope 3324 may be supported on the counterweight sheave and may be coupled at the other end thereof to the counterweight end.

The elevator car 7310 may be formed with a link body support 3311 configured to support the interlocking body 7210.

The link body support 7311 may be formed to protrude toward the interlocking body 7210 such that the interlocking body 7210 can be supported thereby.

In addition, the link body support 7111 may be formed as a link body seat on which the link body is seated.

The drive motor 7321 and the rope end 7326 may be disposed at an upper portion of the hoistway located below a rooftop.

In the elevator cover system 7000 according to the seventh embodiment constructed as described above, when the elevator car 7310 of the elevator module 7300 is lifted by the elevator drive part 7320, the interlocking body 7210 is raised by the elevator car 7310.

In conjunction with upward movement of the interlocking body 7210, the cover plate 7110 of the cover structure 7100 opens the opening O of the hoistway.

In addition, when the elevator car 7310 is lowered, the interlocking body 7210 is lowered due to gravity and the cover plate 3110 closes the opening O of the elevator structure in conjunction with downward movement thereof.

On the other hand, a separate weight (not shown) may be coupled to the interlocking body 7210 by a rope (not shown) to more efficiently realize lowering of the cover plate 7110 and closing of the opening by the cover plate.

Furthermore, the elevator cover system according to this embodiment may incorporate the elevator module to the elevator cover system 6000 shown in FIG. 11.

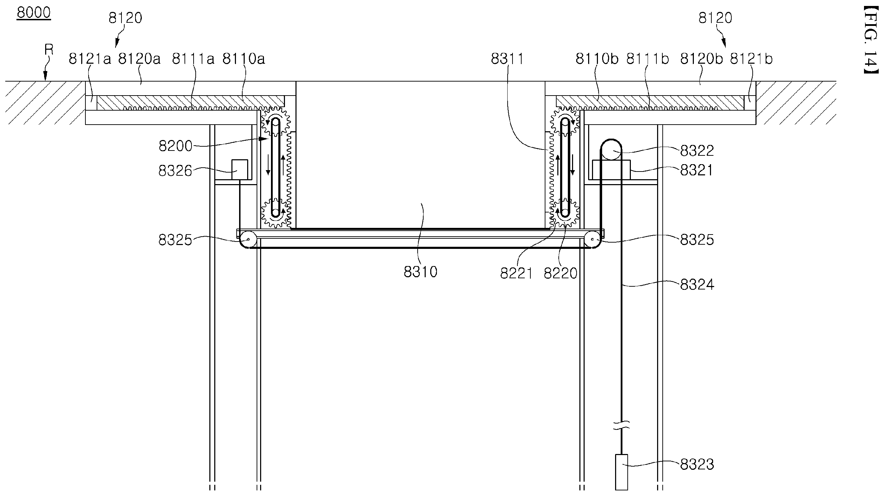

FIG. 14 is a schematic view of an elevator cover system according to an eighth embodiment of the present invention.

In the elevator cover system according to this embodiment, a rack gear is directly mounted on an elevator car and is directly interlinked with upward or downward movement of the elevator car such that the cover plate opens or closes the opening in the elevator structure while slidably moving.

To this end, the elevator cover system 8000 has the same structure as the elevator cover system 6000 shown in FIG. 11 excluding the structure of the interlocking body.

Referring to FIG. 14, the elevator cover system 8000 includes a cover structure 8100, an interlocking structure 8200, and an elevator module 8300.

More specifically, the cover structure 8100 has the same structure as the cover structure 7100 and a detailed description thereof is omitted herein.

The interlocking structure 8200 has the same structure as the interlocking structure 7200 except for the interlocking body.

The elevator module 8300 includes an elevator car 8310 and an elevator drive part 8320.

The elevator drive part 8320 includes a drive motor 8321, a drive sheave 8322, a counterweight 8323, a rope 8324, a car sheave 8325, and a rope end 8326.

The elevator drive part 8320 has the same structure as the elevator drive part 7320, and a detailed description thereof will be omitted herein.

The elevator car 8310 may be formed with a rack gear 8311.

The rack gear 8311 may be selectively meshed with a first pinion 8221 of a first rotating member 8220.

In the elevator cover system 8000 constructed as described above, when the elevator car 8310 is lifted, the rack gears 8311 are engaged with the elevator car 8310 to rotate the first rotating member 8220 in a forward direction.

In conjunction with rotation of the first rotating member 8220, the first cover plate 8110a and the second cover plate 8110b are slidably moved in the horizontal direction to open the opening.

Next, when the elevator car 8310 is lowered, the first rotating member 8220 is rotated in the reverse direction, and the first cover plate 8110a and the second cover plate 8110b are slidably moved to close the opening.

Accordingly, the elevator cover system 8000 can be realized in a simpler structure.

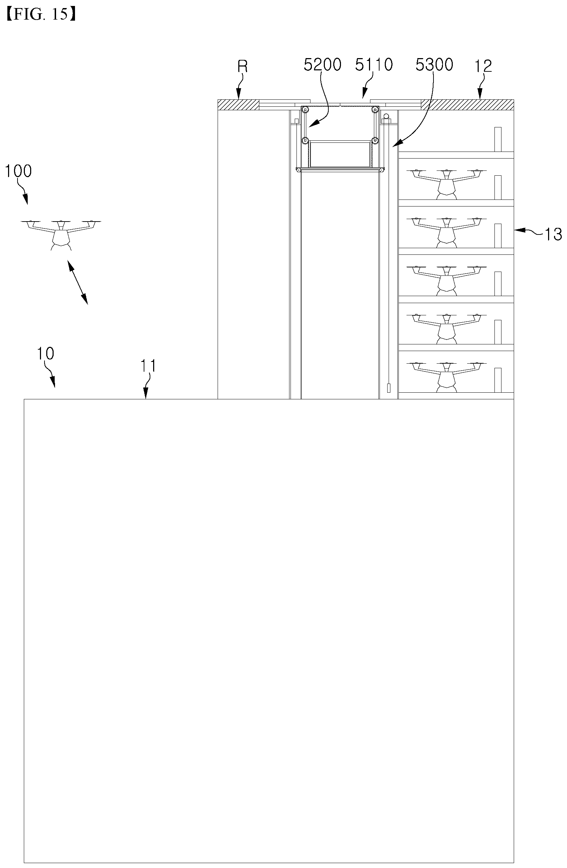

FIG. 15 is a schematic view of an embodiment of the elevator cover system according to the present invention applied to a vertiport.

As shown in the drawings, an elevator cover system may be applied to a vertiport, which is a vertical takeoff and landing site for urban air mobility aircraft.

A vertiport 10 may include a takeoff area, a landing area, and a hangar.

The vertiport 10 may be constructed on the rooftop of a building.

In addition, the hangar 13 of the vertiport 10 may be composed of multiple stories, and each of the takeoff area 11 and the landing area 12 may be selectively located on the rooftop of the building or on the rooftop of the hangar.

An aircraft 100 may be moved to the landing area 12, the hangar 13, and the takeoff area 11 by the elevator module 1300, and may be parked in the hangar P.

When the elevator car of the elevator module 1300 is not located on the vertiport 10, the cover plate 5110 closes the opening of the hoistway.

When the elevator car moves to the rooftop R of the vertiport, which is an upper end of the vertiport 10, the cover plate 5110 opens the opening of the hoistway while slidably moving in the horizontal direction, as shown in FIG. 13.

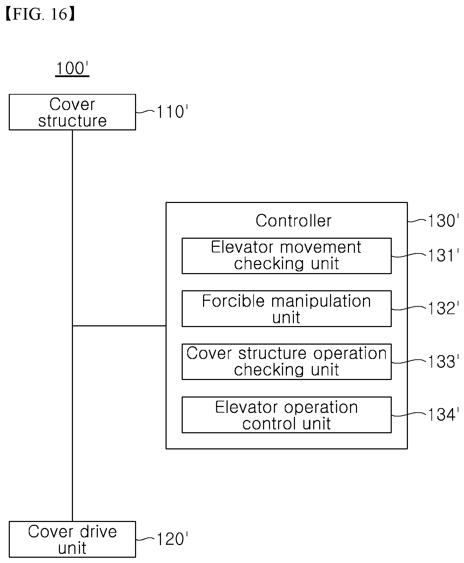

FIG. 16 is a schematic block diagram of an elevator cover system according to the present invention.

The elevator according to the present invention is configured to lift or lower an air mobility aircraft. For example, when a takeoff area, a landing area, and a hangar of the air mobility aircraft are arranged on different floors, the elevator for air mobility aircraft lifts or lowers the air mobility aircraft in the vertical direction for operation of the air mobility aircraft.

In the present invention, the elevator may be referred to as a UAM elevator.

On the other hand, an elevator structure installed with the elevator is formed with a hoistway in which an elevator car receiving an air mobility aircraft therein moves, and the hoistway is formed at an upper end thereof with an opening to transport the air mobility aircraft to the rooftop.

An elevator cover system 100' is configured to selectively open or close the opening of the hoistway in conjunction with movement of the elevator receiving the air mobility aircraft therein.

The elevator cover system 100' is configured to forcibly open or close the opening of the hoistway independent of movement of the elevator receiving the air mobility aircraft therein.

Referring to FIG. 16, the elevator cover system 100' includes a cover structure 110', a cover drive unit 120', and a controller 130'.

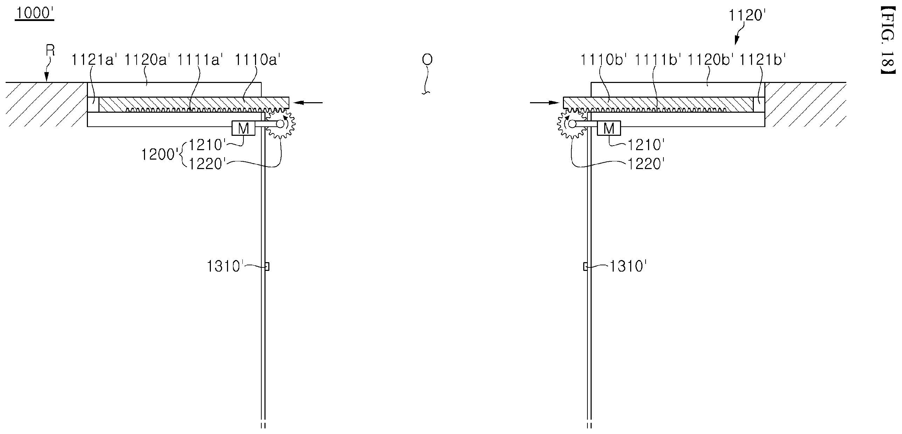

More specifically, the cover structure 110' is configured to open or close an opening (denoted by "O" in FIG. 18) of the hoistway.

To this end, the cover structure 110' includes a cover plate and may be realized as a slide-opening/closing cover structure in which the cover plate is moved in a horizontal direction.

The cover plate may also be raised in a moving direction of the elevator car to open or close the opening.

The cover drive unit 120' is connected to the cover plate and provides power to move the cover plate of the cover structure 110'.

The controller 130' controls operation of the cover structure 110' and the cover drive unit 120'.

The controller 130' includes an elevator movement checking unit 131', a forcible manipulation unit 132', a cover structure operation checking unit 133', and an elevator operation control unit 134'.

The elevator movement checking unit 131' checks whether the elevator car moves to an upper portion of the hoistway. To this end, the elevator movement checking unit 131' may include a position detection sensor to determine a location of the elevator car.

The position detection sensor may be located at an upper portion of the hoistway and may check whether the elevator car passes through the upper portion of the hoistway and moves to an upper end of the hoistway in which the opening is formed.

Further, the elevator movement checking unit 131' may confirm operation information of the elevator car through the elevator operation control unit 134'. That is, the elevator movement checking unit 131' may check through the elevator operation control unit 134' whether the elevator car moves to the upper end of the hoistway in which the opening is formed.

The forcible manipulation unit 132' operates the cover drive unit 120' to open or close the cover structure 110'.

The cover structure operation checking unit 133' checks an open/closed state of the cover structure. That is, the cover structure operation checking unit 133' checks whether the cover structure is open, when the elevator car moves toward the upper end of the hoistway.

That is, since an air mobility aircraft can be destroyed if the elevator car is lifted with the cover structure closed, the cover structure operation checking unit 133' checks an operation state of the cover structure in real time.

The elevator operation control unit 134' checks the operation state of the elevator in real time and controls operation of the cover structure 110' based on the checked result. In addition, the cover structure operation checking unit 133' stops upward movement of the elevator when the elevator car is lifted to the rooftop of the hoistway with the cover structure closed.

The elevator cover system 100' according to the present invention is constructed as described above and is operable to check whether elevator car is moving to the rooftop, and to operate the cover structure to open the opening in the elevator structure.

In addition, when the elevator car is lowered, the cover structure is operated to close the opening in the elevator structure.

On the other hand, the elevator cover system 100' may also forcibly operate the cover structure to open the opening of the hoistway for maintenance of the cover structure and the hoistway, regardless of movement of the elevator car.

The elevator cover system according to the present invention may be applied to elevators for vehicles including general aircraft as well as urban air mobility aircraft.

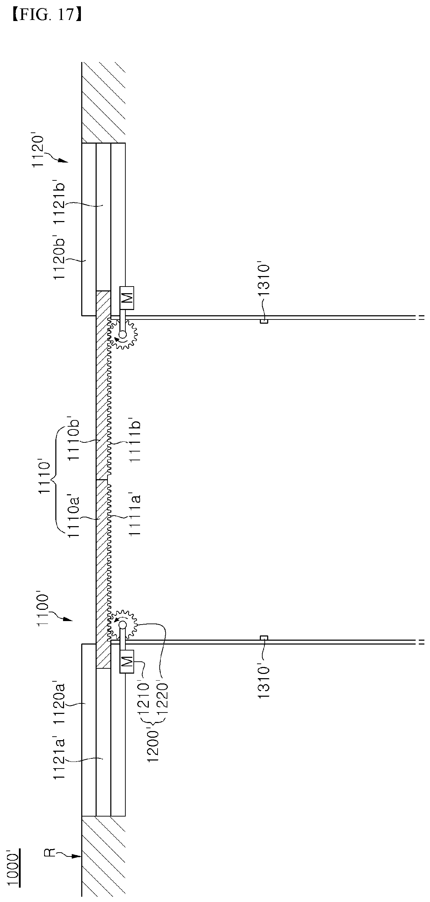

FIG. 17 is a schematic view of an elevator cover system according to a ninth embodiment of the present invention.

The elevator cover system 1000' includes a cover structure 1100', a cover drive unit 1200', and a controller.

More specifically, the cover structure 1100' is operated by the cover drive unit 1200' to open or close an opening (denoted by "O" in FIG. 18) of the hoistway.

The cover structure 1100' includes a cover plate 1110' and a cover case 1120'.

The cover plate 1110' is connected to the cover drive unit 1200' and is slidably moved horizontally by operation of the cover drive unit 1200'.

The cover plate 1110' may be located corresponding to the opening and may have a size capable of covering the opening.

The cover plate 1110' may be supported on the cover case 1120' to be slidably moved in a direction orthogonal to the upward or downward travel direction of the elevator.

The cover plate 1110' may include a first cover plate 1110a' and a second cover plate 1110b', which are provided as a pair of cover plates symmetrical to each other.

The first cover plate 1110a' and the second cover plate 1110b' are formed with rack gears 1111a', 1111b' for interlocking with the cover drive unit 1200', respectively.

The first cover plate 1110a' and the second cover plate 1110b' may be disposed in the same plane at the opposite sides relative to the center of the opening. That is, the first cover plate 1110a' and the second cover plate 1110b' may be supported on the cover case 1120' so as to be slidably movable in opposite directions relative to the center of the opening.

The first cover plate 1110a' and the second cover plate 1110b' may open the opening while slidably moving in the opposite directions and may close the opening in the elevator structure while slidably moving toward the center of the opening.

The cover case 1120' guides and supports the cover plates 1110' to allow sliding movement of the cover plates 1110'.

The cover case 1120' may include a first cover case 1120a' and a second cover case 1120b', which are disposed at the opposite sides of the opening, respectively.

The first cover case 1120a' and the second cover case 1120b' may be formed with cover plate receptacles 1121a', 1121b', into or from which the first cover plate 1110a' and the second cover plate 1110b' are inserted or withdrawn, respectively.

In addition, the first cover case 1120a' and the second cover case 1120b' may be embedded in the rooftop R and may be disposed flush with the rooftop.

Thus, the elevator cover system does not protrude from the rooftop surface, thereby ensuring safety upon taking off or landing of aircraft.

The cover drive unit 1200' moves the cover plate 1110' to open or close the opening.

The cover drive unit 1200' includes a drive motor 1210' and a gear unit 1220'. The drive motor 1210' provides driving force for horizontal sliding movement of the cover plate 1110'.

The gear unit 1220' is coupled to the drive motor 1210'. The gear unit 1220' is meshed with each of the rack gears 1111a', 1111b' of the first cover plate 1110a' and the second cover plate 1110b'.

The controller includes a position detection sensor 1310' to determine upward movement of the elevator car in the hoistway.

Upon determining through the position detection sensor 1310' that the elevator car is moving toward the rooftop, the cover drive unit 1200' may slide the cover plate 1110' in the horizontal direction to open the opening.

FIG. 18 is a schematic view illustrating an operational mode of the elevator cover system shown in FIG. 17.

Referring to FIG. 18, the elevator cover system 1000' is in a state that the elevator car is lifted to the rooftop R.

More specifically, the gear unit 1220' is rotated by operation of the drive motor 1210' of the cover drive unit 1200', and the first cover plate 1110a' and the second cover plate 1110b are slidably moved in the horizontal direction in conjunction with movement of the rack gears 1111a', 1111b' each meshed with the gear unit 1220'.

Accordingly, the opening O of the hoistway is opened.

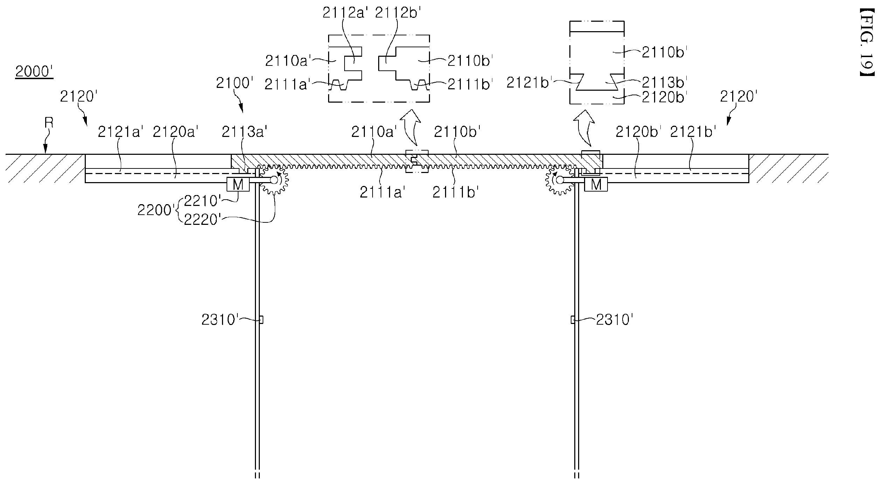

FIG. 19 is a schematic view of an elevator cover system according to a tenth embodiment of the present invention.

The elevator cover system 2000' has the same structure as the elevator cover system 1000' shown in FIG. 1 excluding the shape of the cover structure.

Referring to FIG. 19, the elevator cover system 2000' includes a cover structure 2100' and a cover drive unit 2200'.

More specifically, the cover drive unit 2200' has the same structure as the cover drive unit 1200' of the elevator cover system 1000' and a detailed description thereof will be omitted herein.

The cover structure 2100' includes a cover plate 2110' and a cover support 2120'.

The cover plate 2110' includes a first cover plate 2210a' and a second cover plate 2210b', which are provided as a pair of cover plates symmetrical to each other.

Opposite surfaces of the first cover plate 2210a' and the second cover plate 2210b' facing each other are formed with plate mating portions corresponding to each other, respectively.

By way of example, the first cover plate 2210a' may be formed with a mating groove 2112a' and the second cover plate 2210b' may be formed with a mating protrusion 2112b' corresponding to the mating groove 2112a'.

When the first cover plate 2210a' and the second cover plate 2210b' are moved toward the center of the opening to close the opening in the elevator structure, the mating protrusion 2112b' of the second cover plate 2210b' is inserted into the mating groove 2112a' of the first cover plate 2210a'.

The first cover plate 2210a' and the second cover plate 2210b' are formed with rack gears 2111a', 2111b', respectively.

The cover support 2120' is configured to support horizontal movement of the cover plate 2110' and is embedded in the rooftop R.

When the cover plate 2110' is horizontally moved on the cover support 2120', the cover plate 2110' may be disposed flush with the rooftop R.

Alternatively, the cover support 2120' may be disposed flush with the rooftop R.

The cover support 2120' includes a first cover support 2120a' and a second cover support 2120b'. The first cover support 2120a' and the second cover support 2120b' are disposed at the opposite sides of the opening.

The first cover support 2120a' may be formed with a first slide groove 2121a' and the second cover support 2120b' may be formed with a second slide groove 2121b'.

The first cover plate 2210a' may be formed with a first insertion protrusion 21130a' corresponding to the first slide groove 2121a', and the second cover plate 2210b' may be formed with a second insertion protrusion 2113b' corresponding to the second slide groove 2121b'.

The first insertion protrusion 2113a' of the first cover plate 2210a' is inserted into the first slide groove 2121a' in the first cover support 2120a' and the second insertion protrusion 2113b' of the second cover plate 2210b' is inserted into the second slide groove 2121b' in the second cover support 2120b' to be slidably moved therein.

Accordingly, the cover structure 2100' may be realized as a more stable structure.

As a result, the elevator cover system 2000' according to the second embodiment can more reliably cover the opening of the hoistway through the coupling structure of the cover plate 2110' and can more reliably prevent inflow of foreign matter, such as rainwater and the like.

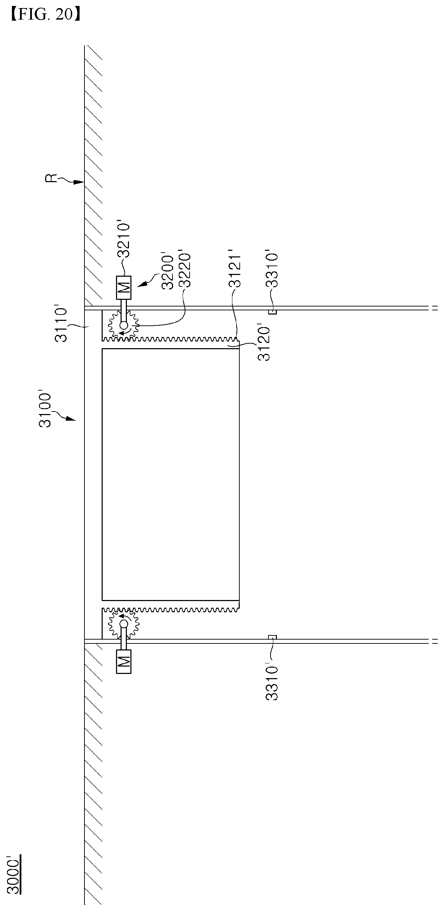

FIG. 20 is a schematic view of an elevator cover system according to an eleventh embodiment of the present invention.

An elevator cover system 3000' includes a cover structure 3100', a cover drive unit 3200', and a controller.

The cover structure 3100' includes a cover plate 3110' and a support body 3120'.

The cover plate 3110" is located corresponding to the opening and a support body 3120' is coupled to a lower side of the cover plate 3110'.

The support body 3120" extends in the upward or downward travel direction of the elevator car and is provided at opposite sides thereof with rack gears 3121'.

The cover drive unit 3200' includes a drive motor 3210' and a gear unit 3220'.

The gear unit 3220' is meshed with the rack gear 3121'.

The drive motor 3210' provides driving force for moving the cover plate 3110' in the upward or downward travel direction of the elevator car.

The controller may include a position detection sensor 3310' to determine upward movement of the elevator car in the hoistway.

The elevator cover system 3000' according to the third embodiment is constructed as described above, and upon determining through the position detection sensor 3310' that the elevator car is moving toward the rooftop, the cover drive unit 3200' may raise the support body 3120' to open the opening.

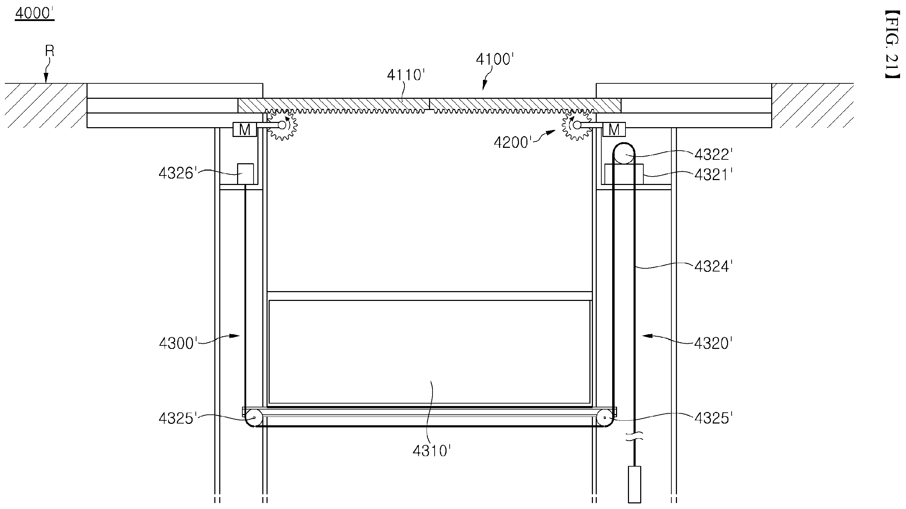

FIG. 21 is a schematic view of an elevator cover system according to a twelfth embodiment of the present invention.

The elevator cover system 4000' further includes an elevator module, as compared with the elevator cover system 1000' shown in FIG. 17.

Referring to FIG. 21, an elevator cover system 4000' includes a cover structure 4100', a cover drive unit 4200', and an elevator module 4300'.

The cover structure 4100' and the cover drive unit 4200' are the same as the cover structure 1100' and the cover drive unit 1200' shown in FIG. 1, and detailed descriptions thereof will be omitted herein.

The elevator module 4300' includes an elevator car 4310' and an elevator drive part 4320'.

The elevator drive part 4320' includes a drive motor 4321', a drive sheave 4322', a counterweight 4323', a rope 4324', a car sheave 4325', and a rope end 4326'.

The drive motor 4321' is disposed at an upper portion of the hoistway and provides driving force for lifting or lowering the elevator car 4310'.

The drive motor 4321' rotates the drive sheave 432'2, on which the rope 4324' is supported, to lift or lower the elevator car 4310'.

The drive sheave 4322' is coupled to the drive motor 4321'.

The car sheave 4325' is coupled to the elevator car 4310' and supports the rope 4324', which lifts or lowers the elevator car 4310'.

The rope 4324' is supported on the drive sheave 4322' and the car sheave 4325'. The rope 4324' may support the counterweight 4323' on one end thereof and may be coupled at the other end thereof to the rope end 4326'.

The elevator drive part 4320' may further include a counterweight end (not shown) disposed adjacent to the drive motor 4321'.

The counterweight may be coupled to a counterweight sheave (not shown), and the rope 4324' may be supported on the counterweight sheave and may be coupled at the other end thereof to the counterweight end.

The drive motor 4321' and the rope end 4326' may be disposed at an upper portion of the hoistway located below a rooftop.

In the elevator cover system 4000' according to the twelfth embodiment constructed as described above, when the elevator car 4310' of the elevator module 4300' is lifted by the elevator drive part 4320', the cover drive unit 4200' slidably moves the cover plate 4110' in the horizontal direction to open the openings upon determining through the position detection sensor 1310' (see FIG. 17) that the elevator car is moving toward the rooftop.

In addition, when the elevator car 4310' is lowered, the cover drive unit 4200' allows the cover plate 3110' to close the opening O of the hoistway.

In addition, the elevator cover system may include the elevator module coupled to the elevator cover system 2000' shown in FIG. 19.

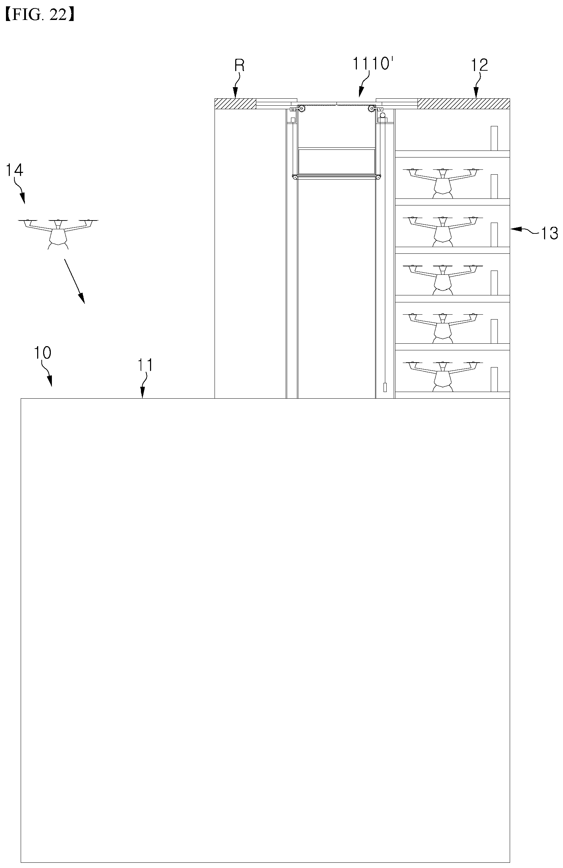

FIG. 22 is a schematic view of an embodiment of the elevator cover system according to the present invention applied to a vertiport.

As shown in the drawings, an elevator cover system may be applied to a vertiport, which is a vertical takeoff and landing site for air mobility aircraft.

The vertiport 10 may include a takeoff pad, a landing area, and a hangar.

The vertiport 10 may be constructed on the rooftop of a building.

In addition, the hangar 13 of the vertiport 10 may be composed of multiple stories, and each of the takeoff area 11 and the landing area 12 may be selectively located on the rooftop of the building or on the rooftop of the hangar.

An aircraft 14 may be moved to the landing area 12, the hangar 13, and the takeoff area 11 by the elevator module 1300, and may be parked in the hangar P.

When the elevator car of the elevator module 1300 is not located on the vertiport 10, the cover plate 1110' closes the opening of the hoistway.

When the elevator car moves to the rooftop R of the vertiport, which is an upper end of the vertiport 10, the cover plate 1110' opens the opening of the hoistway while slidably moving in the horizontal direction, as shown in FIG. 18.

## Claims

1. An elevator cover system comprising:
a cover structure comprising a cover plate disposed to face an opening of a hoistway; and
a link structure comprising a link bar coupled at one end thereof to the cover plate and a link body coupled to the other end of the link bar and raised or lowered in a moving direction of the elevator car,
wherein the cover plate is slidably moved in a horizontal direction orthogonal to an upward or downward travel direction of the elevator car in conjunction with movement of the link structure to open or close the opening of the hoistway.

2. The elevator cover system according to claim 1, wherein the cover structure further comprises a cover case configured to support the cover plate and formed with a cover plate receptacle into which the cover plate is inserted.

3. The elevator cover system according to claim 1, wherein
the cover plate comprises a first cover plate and a second cover plate, and
the link bar comprises a first link bar and a second link bar configured to slidably move the first cover plate and the second cover plate in the horizontal direction, respectively,
the first link bar being connected to the first cover plate, and the second link bar being connected to the second cover plate.

4. The elevator cover system according to claim 3, wherein surfaces of the first cover plate and the second cover plate facing each other are formed with plate mating portions corresponding to each other, respectively.

5. The elevator cover system according to claim 1, wherein the link structure further comprises a link support coupled to each end of the link bar, and a link guide member in which the link support is inserted and guided to move,
the link guide member being formed with a link support inserting portion extending in a longitudinal direction of the link guide member.

6. The elevator cover system according to claim 5, wherein the link guide member comprises a first link guide member and a second link guide member,
the second link guide member being provided to an upper portion of the first link guide member to be disposed at both sides of the first link guide member in an orthogonal direction thereto.

7. The elevator cover system according to claim 1, wherein the cover structure further comprises a cover support configured to support horizontal movement of the cover plate and formed with a slide groove, and the cover plate is formed with an insertion protrusion corresponding to the slide groove.

8. The elevator cover system according to claim 1, further comprising:
an elevator module configured to raise or lower the link body,
wherein the elevator module comprises an elevator car supporting the link body and an elevator drive part configured to lift or lower the elevator car.

9. The elevator cover system according to claim 8, wherein the elevator drive part comprises: a rope; a drive motor disposed at an upper portion of the hoistway and providing driving force for lifting or lowering the elevator car; a drive sheave coupled to the drive motor and on which the rope is supported; a car sheave coupled to the elevator car and supporting the rope for lifting or lowering the elevator car; a counterweight supported on one side of the rope; and a rope end to which the other side of the rope is coupled.

10. The elevator cover system according to claim 9, wherein the elevator car is formed with a link body support configured to support the link body.

11. The elevator cover system according to claim 8, wherein the drive motor and the rope end are disposed at an upper portion of the hoistway located below a rooftop.

12. The elevator cover system according to claim 1, wherein the elevator car is moved to a landing area, a hangar, and a takeoff area of a vertiport and the cover structure is disposed flush with a rooftop of the vertiport.

13. An elevator cover system comprising:
a cover structure comprising a cover plate disposed to face an opening of a hoistway;
a link structure comprising a link bar coupled at one end thereof to the cover plate; and
an elevator module configured to move the link structure,
wherein the elevator module comprises an elevator car to which the link bar is coupled, and an elevator drive part configured to lift or lower the elevator car, and
wherein the cover plate is slidably moved in a horizontal direction orthogonal to an upward or downward travel direction of the elevator car in conjunction with movement of the elevator car to open or close the opening of the hoistway.

14. The elevator cover system according to claim 13, wherein
the cover plate comprises a first cover plate and a second cover plate; and
the link bar comprises a first link bar and a second link bar configured to slidably move the first cover plate and the second cover plate in the horizontal direction, respectively,
the first link bar being connected to the first cover plate, and the second link bar being connected to the second cover plate.

15. The elevator cover system according to claim 13, wherein each of the first link bar and the second link bar comprises a plurality of link connecting bars, the plurality of link connecting bars being foldable link bars capable of being folded and unfolded.

16. An elevator cover system comprising:
a cover structure comprising a cover plate disposed to face an opening of a hoistway and formed with a rack gear; and
an interlocking structure engaged with the rack gear of the cover plate and moving the rack gear while being raised or lowered in a moving direction of an elevator car,
wherein the cover plate is slidably moved in a horizontal direction orthogonal to an upward or downward travel direction of the elevator car in conjunction with movement of the interlocking structure to open or close the opening of the hoistway.

17. The elevator cover system according to claim 16, wherein the interlocking structure comprises:
an interlocking body raised or lowered in the moving direction of the elevator car and formed with a rack gear;
a first rotating member having a first belt holder and a first pinion meshed with the rack gear of the interlocking body;
a second rotating member having a second belt holder and a second pinion meshed with the rack gear of the cover plate; and
a belt supported at one side thereof on the first belt holder of the first rotating member and at the other side thereof on the second belt holder of the second rotating member to transmit rotational force of the first rotating member to the second rotating member.

18. The elevator cover system according to claim 16, wherein the cover structure further comprises a cover case configured to support the cover plate and formed with a cover plate receptacle into which the cover plate is inserted.

19. The elevator cover system according to claim 16, wherein
the cover plate comprises a first cover plate and a second cover plate, and
the link bar comprises a first link bar and a second link bar configured to slidably move the first cover plate and the second cover plate in the horizontal direction, respectively,
the first link bar being connected to the first cover plate, and the second link bar being connected to the second cover plate.

20. The elevator cover system according to claim 19, wherein surfaces of the first cover plate and the second cover plate facing each other are formed with plate mating portions corresponding to each other, respectively.

21. The elevator cover system according to claim 16, wherein
the cover structure further comprises a cover support configured to support horizontal movement of the cover plate and formed with a slide groove, and
the cover plate is formed with an insertion protrusion corresponding to the slide groove.

22. The elevator cover system according to claim 16, further comprising:
an elevator module configured to raise or lower the interlocking body of the interlocking structure,
wherein the elevator module comprises an elevator car supporting the interlocking body, and an elevator drive part configured to lift or lower the elevator car.

23. The elevator cover system according to claim 22, wherein the elevator drive part comprises: a rope; a drive motor disposed at an upper portion of the hoistway and providing driving force for lifting or lowering the elevator car; a drive sheave coupled to the drive motor and on which the rope is supported; a car sheave coupled to the elevator car and supporting the rope for lifting or lowering the elevator car; a counterweight supported on one side of the rope; and a rope end to which the other side of the rope is coupled.

24. The elevator cover system according to claim 23, wherein the elevator car is formed with an interlocking body support configured to support the interlocking body.

25. The elevator cover system according to claim 23, wherein the drive motor and the rope end are disposed at an upper portion of the hoistway located below a rooftop.

26. The elevator cover system according to claim 16, wherein the elevator car is moved to a landing area, a hangar, and a takeoff area of a vertiport, and the cover structure is disposed flush with a rooftop of the vertiport.

27. An elevator cover system comprising:
a cover structure comprising a cover plate disposed to face an opening of a hoistway and formed with a rack gear;
an interlocking structure engaged with the rack gear of the cover plate and moving the rack gear; and
an elevator module interlocking engaged with the interlocking structure,
wherein the elevator module comprises an elevator car formed with a rack gear, and an elevator drive part configured to lift or lower the elevator car, and
wherein the cover plate is slidably moved in a horizontal direction orthogonal to an upward or downward travel direction of the elevator car in conjunction with movement of the elevator car to open or close the opening of the hoistway.

28. The elevator cover system according to claim 27, wherein the interlocking structure comprises:
a first rotating member formed with a first belt holder and a first pinion meshed with the rack gear of the elevator car;
a second rotating member formed with a second belt holder and a second pinion meshed with the rack gear of the cover plate; and
a belt supported at one side thereof on the first belt holder of the first rotating member and at the other side thereof on the second belt holder of the second rotating member to transmit rotational force of the first rotating member to the second rotating member.

29. The elevator cover system according to claim 27, wherein the elevator car is moved to a landing area, a hangar, and a takeoff area of a vertiport, and the cover structure is disposed flush with a rooftop of the vertiport.

30. An elevator cover system comprising:
a cover plate;
a cover structure opening and closing an opening of a hoistway;
a cover drive unit connected to the cover plate and providing power for moving the cover plate; and
a controller controlling operation of the cover structure and the cover drive unit,
wherein the cover drive unit moves the cover plate in a horizontal direction or in a vertical direction.

31. The elevator cover system according to claim 30, wherein the controller comprises: a position detection sensor; an elevator movement checking unit configured to check whether the elevator car moves to an upper portion of the hoistway; a forcible manipulation unit configured to operate the cover drive unit to open or close the cover structure; a cover structure operation checking unit configured to check an open/closed state of the cover structure; and an elevator operation control unit configured to check an operation state of the elevator in real time and to control operation of the cover structure.

32. An elevator cover system comprising:
a cover structure comprising a cover plate disposed to face an opening of a hoistway and formed with a rack gear;
a gear unit meshed with the rack gear of the cover plate; and
a cover drive unit engaged with the gear unit and comprising a drive motor providing driving force for horizontal sliding movement of the cover plate,
wherein the cover plate is slidably moved in a horizontal direction orthogonal to an upward or downward travel direction of the elevator car in conjunction with operation of the cover drive unit to open or close the opening of the hoistway.

33. The elevator cover system according to claim 32, wherein the cover structure further comprises a cover case configured to support the cover plate and formed with a cover plate receptacle into which the cover plate is inserted.

34. The elevator cover system according to claim 32, wherein
the cover plate comprises a first cover plate and a second cover plate, and
the link bar comprises a first link bar and a second link bar configured to slidably move the first cover plate and the second cover plate in the horizontal direction, respectively,
the first link bar being connected to the first cover plate, and the second link bar being connected to the second cover plate.

35. The elevator cover system according to claim 34, wherein surfaces of the first cover plate and the second cover plate facing each other are formed with plate mating portions corresponding to each other, respectively.

36. The elevator cover system according to claim 31, wherein
the cover structure further comprises a cover support configured to support horizontal movement of the cover plate and formed with a slide groove, and
the cover plate is formed with an insertion protrusion corresponding to the slide groove.

37. The elevator cover system according to claim 31, further comprising:
an elevator car moving in the hoistway; and
an elevator module lifting or lowering the elevator car.

38. The elevator cover system according to claim 37, wherein the elevator drive part comprises: a rope; a drive motor disposed at an upper portion of the hoistway and providing driving force for lifting or lowering the elevator car; a drive sheave coupled to the drive motor and on which the rope is supported; a car sheave coupled to the elevator car and supporting the rope for lifting or lowering the elevator car; a counterweight supported on one side of the rope; and a rope end to which the other side of the rope is coupled.

39. The elevator cover system according to claim 37, wherein the drive motor and the rope end are disposed at an upper portion of the hoistway located below a rooftop.

40. The elevator cover system according to claim 32, wherein the elevator car is moved to a landing area, a hangar, and a takeoff area of a vertiport, and the cover structure is disposed flush with a rooftop of the vertiport.

41. An elevator cover system comprising:
a cover structure disposed to face an opening of a hoistway and including a cover plate and a support body coupled to a lower side of the cover plate and extending in an upward or downward travel direction of an elevator car and formed with a rack gear;
a gear unit meshed with the rack gear of the support body; and
a cover drive unit engaged with the gear unit and comprising a drive motor providing driving force for moving the upper cover in the upward or downward travel direction of the elevator car,
wherein the cover structure is moved in the upward or downward travel direction of the elevator car in conjunction with operation of the cover drive unit to open or close the opening of the hoistway.

42. The elevator cover system according to claim 41, further comprising:
a position detection sensor configured to check upward movement of the elevator car in the hoistway.

43. The elevator cover system according to claim 41, wherein the elevator car is moved to a landing area, a hangar, and a takeoff area of a vertiport, and the cover structure is disposed flush with a rooftop of the vertiport.
